# EUROPEAN PATENT APPLICATION

(11) **EP 3 309 505 A1**
(43) Date of publication of application: **18.04.2018**
(21) Application number: 16807083.7
(22) Date of filing: 27.05.2016
(51) Int. Cl.: G01B 11/02, G06T 1/00

(54) **DIMENSION MEASUREMENT DEVICE AND DIMENSION MEASUREMENT METHOD**

(30) Priority: 11.06.2015 JP 2015118565; 17.07.2015 JP 2015143369
(71) Applicant: Panasonic Intellectual Property Management Co., Ltd., Osaka-shi, Osaka 540-6207 (JP)
(72) Inventor: SUZUKI, Akihiro, Osaka 540-6207, (JP); OHTSUBO, Shohji, Osaka 540-6207, (JP); MORIYAMA, Takaaki, Osaka 540-6207, (JP); IKEDA, Yutaka, Osaka 540-6207, (JP); ISHIHARA, Takeshi, Osaka 540-6207, (JP)
(74) Representative: Eisenführ Speiser
(86) International application number: PCT/JP2016/002571
(87) International publication number: WO 2016/199366

(57) **Abstract**

A dimension measurement device that measures dimensions of a cargo (C) placed on a loading platform P or a cargo (CP) with a loading platform, includes a projector that transmits measurement light, a camera that receives the reflected measurement light and acquires a first cargo distance image including cargo C and the loading platform (P), a processor, and a memory. The processor, cooperating with the memory, stores the first cargo distance image in the memory, specifies a region including an unnecessary object other than the cargo (C) or the cargo (CP) with a loading platform in the first cargo distance image, on the basis of a shape of the loading platform P which is present in the first cargo distance image, and writes predetermined information in the specified region, thereby generating a second cargo distance image.

## Description

### TECHNICAL FIELD

The present disclosure relates to a technique for measuring dimensions of a cargo or a cargo with a loading platform.

### BACKGROUND ART

Along with the recent increase in economic activity, the volume of cargo distribution has increased. In particular, cargos include many irregular cargos which are not necessarily rectangular parallelepipeds, and thus there have been demands for a technique for smoothly and accurately measuring dimensions of such irregular cargos.

PTL 1 discloses a three-dimensional shape measurement method. However, in this method, a space code is specified for each position corresponding to each light receiving element of a camera, on the basis of the order of received measurement light beams. Here, an unmeasurable point is extracted by extracting a light receiving element that has not received measurement light, among the light receiving elements on a light receiving plane, and an interpolation value based on a value of a space code in a light receiving element in the vicinity of the unmeasurable point is calculated with respect to a space code of the unmeasurable point. It is also possible to measure a distance to a portion that cannot be irradiated with measurement light, on the basis of the interpolation value, and it is also possible to perform application to the measurement of dimensions of an irregular cargo.

PTL 2 discloses an object identifying method. However, in the method, a three-dimensional space in a world coordinate system having a predetermined workbench as the origin is set to be a matching space, and an object distance image measured by distance image measurement means is plotted in the matching space. Thereby, a three-dimensional object surface position image obtained by virtually reconstructing an object surface position in the matching space is projected onto a horizontal Z-X plane of the world coordinate system, thereby obtaining a projection image. The center of gravity of the projection image and a direction of an inertia main shaft (inertia main shaft direction) are obtained, and coordinate transformation (rotational transformation around a y-axis) is performed on the three-dimensional object surface position image so that a reference coordinate system is constituted by the inertia main shaft direction and a direction perpendicular to the inertia main shaft direction. A maximum position coordinate value and a minimum position coordinate value in a transformation coordinate system are obtained, thereby obtaining dimensions of a circumscribed rectangular parallelepiped. The circumscribed rectangular parallelepiped, which is a rectangular parallelepiped which is circumscribed to an object, can also be applied to the measurement of dimensions of an irregular cargo.

### Citation List

### Patent Literature

PTL 1: Japanese Patent Unexamined Publication No. 2000-193433
PTL 2: Japanese Patent Unexamined Publication No. 2004-259114

### SUMMARY OF THE INVENTION

It is possible to obtain a circumscribed rectangular parallelepiped of an object, such as an irregular cargo, by applying the techniques of PTL 1 and PTL 2, and to measure dimensions of the object. Here, in the related art, a background distance image that does not include a cargo is first acquired, a cargo distance image including a cargo is then acquired, and a distance image of the cargo is acquired from a difference between the background distance image and the cargo distance image, thereby measuring dimensions of the cargo.

In the actual cargo distribution situation, conditions for measuring dimensions of a cargo, which is an object, generally change every moment. For example, it is considered that there are many cases where an environment at a point in time of the acquisition of the background distance image and an environment at a point in time of the acquisition of the cargo distance image are different from each other. In such a case, it may also be considered that an appropriate background distance image cannot be obtained, and there is a possibility that an accurate cargo distance image cannot be obtained.

In the actual cargo distribution situation, a cargo is generally distributed in a state of being loaded on a predetermined loading platform such as a pallet. Since such distribution is conventional, there has been an attempt to measure dimensions of a cargo with a loading platform, but there has been also an increasing demand for the measurement of dimensions of a cargo itself from which a loading platform is removed.

The present disclosure relates to a technique for appropriately measuring dimensions of a cargo or a cargo with a loading platform.

The present disclosure provides a dimension measurement device that measures dimensions of a cargo placed on a loading platform or a cargo with a loading platform, the dimension measurement device including a transmitter that transmits measurement waves, a receiver that receives the reflected measurement waves and acquires a first cargo distance image including the cargo and the loading platform, a processor, and a memory, in which the processor, cooperating with the memory, stores the first cargo distance image in the memory, specifies a region including an unnecessary object other than the cargo or the cargo with a loading platform in the first cargo distance image, on the basis of a shape of the loading platform which is present in the first cargo distance image, and writes predetermined information in the specified region, thereby generating a second cargo distance image.

The present disclosure also provides a dimension measurement method of measuring dimensions of a cargo placed on a loading platform or a cargo with a loading platform, the dimension measurement method including transmitting measurement waves by a transmitter, receiving the reflected measurement waves and acquiring a first cargo distance image including the cargo and the loading platform by a receiver, and causing a processor, cooperating with the memory, to store the first cargo distance image in the memory, to specify a region including an unnecessary object other than the cargo or the cargo with a loading platform in the first cargo distance image, on the basis of a shape of the loading platform which is present in the first cargo distance image, and to write predetermined information in the specified region, thereby generating a second cargo distance image.

According to the present disclosure, the second cargo distance image is generated by specifying a region including an unnecessary object other than a cargo in the first cargo distance image and writing predetermined information in the specified region. It is possible to obtain a circumscribed rectangular parallelepiped of a cargo and to appropriately measure dimensions of the cargo by utilizing the second cargo distance image.

### BRIEF DESCRIPTION OF DRAWINGS

FIG. 1 is a block diagram illustrating a configuration of a dimension measurement device according to Exemplary Embodiment 1.
FIG. 2A is a diagram illustrating a state where a cargo is loaded on a fork.
FIG. 2B is a diagram illustrating a state where a cargo with a loading platform is loaded on a fork.
FIG. 3A is a diagram illustrating a background distance image.
FIG. 3B is a diagram illustrating a background distance image.
FIG. 3C is a diagram illustrating a cargo distance image.
FIG. 3D is a diagram illustrating a cargo distance image.
FIG. 4A is a diagram illustrating a state where a cargo is not loaded on a fork.
FIG. 4B is a diagram illustrating a background distance image which is acquired and generated in the state illustrated in FIG. 4A.
FIG. 4C is a diagram illustrating a state where a cargo with a loading platform is loaded on a fork.
FIG. 4D is a diagram illustrating a cargo distance image which is acquired and generated in the state illustrated in FIG. 4C.
FIG. 5A is a diagram illustrating a state where an object, which has not been present in an image at the beginning, is seen in the image in accordance with the movement of a forklift.
FIG. 5B is a diagram illustrating the processing of an image related to a wall.
FIG. 5C is a diagram illustrating the processing of an image related to a foreign material on a floor.
FIG. 6A is a diagram illustrating a state where another object, which has not been present in an image at the beginning, is seen in the image.
FIG. 6B is a diagram illustrating the processing of an image related to another object.
FIG. 7 is a flow chart illustrating an outline of an operation procedure performed by the dimension measurement device of Exemplary Embodiment 1.
FIG. 8A is a flow chart illustrating a detailed processing procedure (subroutine) of step S10 in FIG. 7.
FIG. 8B is a diagram illustrating distance images that are generated whenever the height of a fork is changed, the height being changed in a plurality of steps.
FIG. 9 is a flow chart illustrating a detailed processing procedure (subroutine) of step S40 in FIG. 7.
FIG. 10A is a flow chart illustrating a detailed processing procedure (subroutine) of step S41 in FIG. 9.
FIG. 10B is a diagram of a distance image illustrating processing in step S412.
FIG. 10C is a diagram of a distance image illustrating processing in step S413.
FIG. 10D is a diagram of a distance image illustrating processing in step S414.
FIG. 10E is a conceptual diagram of processing when a distance of an image of a front surface of a loading platform is obtained.
FIG. 11A is a flow chart illustrating a detailed processing procedure (subroutine) of step S42 in FIG. 9.
FIG. 11B is a diagram of a distance image illustrating processing in step S421.
FIG. 11C is a diagram of a distance image illustrating processing in step S422.
FIG. 11D is a diagram of a distance image illustrating processing in step S423.
FIG. 11E is a diagram of a distance image illustrating processing in step S424.
FIG. 12A is a diagram illustrating a process of synthesizing a plurality of second cargo distance images to thereby generate a final cargo distance image.
FIG. 12B is a diagram illustrating a process of performing coordinate development of a final cargo distance image in a three-dimensional matching space.
FIG. 12C is a diagram illustrating a process of correcting the direction of an inertia main shaft and performing coordinate transformation of a three-dimensional matching space.
FIG. 12D is a diagram illustrating a process of calculating a circumscribed rectangular parallelepiped of a cargo in a three-dimensional matching space after coordinate transformation.
FIG. 13 is a flow chart illustrating an outline of an operation procedure in a case where a dimension measurement device does not acquire a background distance image.
FIG. 14A is a flow chart illustrating a detailed processing procedure (subroutine) of step S40A in FIG. 13.
FIG. 14B is a diagram of a distance image illustrating processing in step S40A1.
FIG. 14C is a diagram of a distance image illustrating processing in step S40A2.
FIG. 14D is a diagram of a distance image illustrating processing in step S40A3.
FIG. 14E is a diagram of a distance image illustrating processing in step S40A4.
FIG. 14F is a diagram of a distance image illustrating processing in step S40A5.
FIG. 15A is an image illustrating the overall processing performed by a dimension measurement device according to Exemplary Embodiment 2.
FIG. 15B is a diagram illustrating processing performed by the dimension measurement device according to Exemplary Embodiment 2.
FIG. 15C is a diagram illustrating processing performed by the dimension measurement device according to Exemplary Embodiment 2.
FIG. 15D is a diagram illustrating processing performed by the dimension measurement device according to Exemplary Embodiment 2.
FIG. 15E is a diagram illustrating processing performed by the dimension measurement device according to Exemplary Embodiment 2.
FIG. 16A is a diagram illustrating processing according to a modification example of processing performed by the dimension measurement device according to Exemplary Embodiment 2.
FIG. 16B is a diagram illustrating processing according to a modification example of processing performed by the dimension measurement device according to Exemplary Embodiment 2.
FIG. 16C is a diagram illustrating processing according to a modification example of processing performed by the dimension measurement device according to Exemplary Embodiment 2.
FIG. 16D is a diagram illustrating processing according to a modification example of processing performed by the dimension measurement device according to Exemplary Embodiment 2.
FIG. 16E is a diagram illustrating processing according to a modification example of processing performed by the dimension measurement device according to Exemplary Embodiment 2.
FIG. 17 is a diagram illustrating a state where a forklift having a cargo with a loading platform loaded thereon moves through a predetermined path of a warehouse.
FIG. 18 is a conceptual diagram illustrating processing performed by a work diagnosis system including the dimension measurement device.
FIG. 19 is a conceptual diagram illustrating a modification example of the exemplary embodiment.

### DESCRIPTION OF EMBODIMENT

Hereinafter, reference will be appropriately made to the accompanying drawings to specifically describe an exemplary embodiment (hereinafter, referred to as "the present exemplary embodiment") which specifically discloses a dimension measurement device according to the present disclosure. However, unnecessarily detailed description may be omitted. For example, detailed description of already well-known matters and repeated description of substantially the same configurations may be omitted. This is to avoid making the following description unnecessarily redundant and to facilitate the understanding by a person skilled in the art. The accompanying drawings and the following description are provided so that a person skilled in the art can fully understand the present disclosure, and are not intended to limit subject matters described in claims.

### (First Exemplary Embodiment)

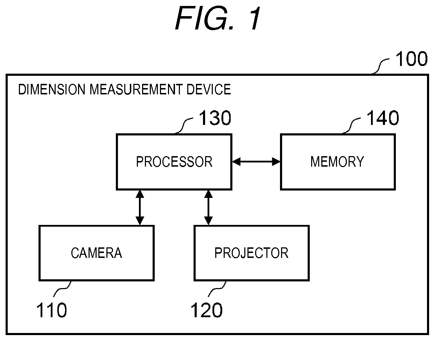

Hereinafter, Exemplary Embodiment 1 will be described with reference to FIGS. 1 to 12.

### [Configuration]

FIG. 1 is a block diagram illustrating a configuration of a dimension measurement device according to Exemplary Embodiment 1. Dimension measurement device 100 illustrated in FIG. 1 is installed at equipment (a cargo transport device such as a forklift, a floor of a warehouse, or the like), and includes at least camera 110, projector 120, processor 130, and memory 140. Dimension measurement device 100 is a device that measures dimensions of a cargo placed on a loading platform (pallet) or a cargo with a loading platform. Hereinafter, the term "cargo" which is a target for measurement of dimension or the term "cargo C" may include not only a "cargo" itself but also a "cargo with a loading platform" including a cargo and a loading platform or cargo CP with a loading platform, except for special cases. Dimension measurement device 100 measures dimensions of three sides of a rectangular parallelepiped in a case where a cargo is the rectangular parallelepiped, and measures dimension of three sides of a circumscribed rectangular parallelepiped (to be described later) which is circumscribed to a cargo, as described later, in a case where the cargo is the rectangular parallelepiped.

Camera 110 as an imaging device includes various elements such as a lens, not shown in the drawing, and an image sensor. Projector 120 as a light projection device projects measurement light necessary for the measurement of dimensions of a cargo as an object to be measured. Projector 120 projects measurement light onto the cargo, and camera 110 receives the measurement light reflected by the cargo. Here, a light projection pattern of the measurement light is deformed by the surface of the cargo, and the deformation of the light projection pattern of the measurement light reflected by camera 110 is treated as information of a depth, that is, a distance in each pixel of an image to be generated. Here, the image to be generated is generally called a "distance image". The distance image may be generated by camera 110, or may be generated by processor 130, to be described later, by obtaining information from camera 110.

The wording "distance image" refers to an image accommodating distance information to a position (including the surface of the cargo) which is indicated by each pixel. For example, the distance image can be visually expressed by expressing pieces of distance information of respective pixels on a display by different colors.

Processor 130, which is constituted by a general computational device, reads out various control programs or data from a built-in storage device, not shown in the drawing, or memory 140 and controls the overall operation of dimension measurement device 100. Memory 140 as a storage device reads control programs necessary for processor 130 to perform various processes and performs an operation such as the evacuation of data. That is, processor 130 and memory 140 control various processes by dimension measurement device 100 in cooperation with each other.

Dimension measurement device 100 can be configured by connecting an independent computer functioning as processor 130 and memory 140 to camera 110 and projector 120 through wired communication or wireless communication. Naturally, dimension measurement device 100 can be configured as an integrated device in which camera 110, projector 120, processor 130, and memory 140 are accommodated in an integrated housing.

### [Outline of Processing]

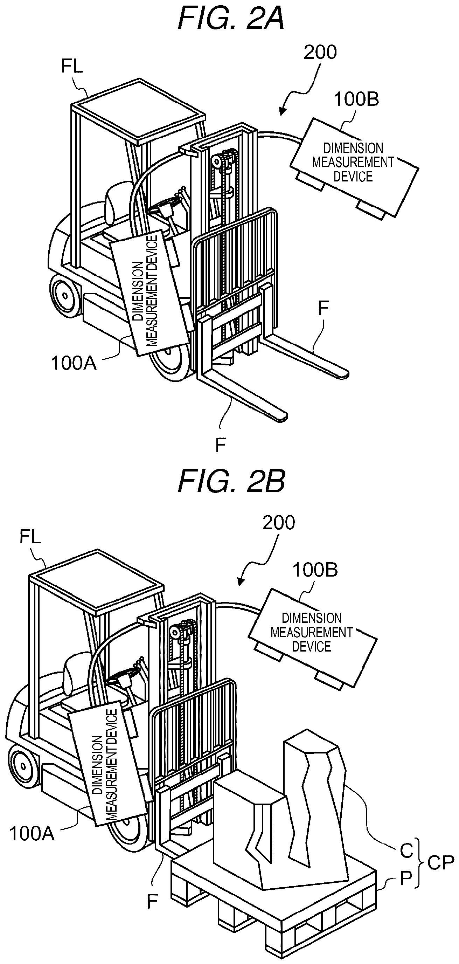

FIGS. 2A and 2B are diagrams illustrating a state where dimension measurement system 200 including two dimension measurement devices 100A and 100B (hereinafter, also referred to as "dimension measurement device 100") is fixed to forklift FL and a situation in which problems of the invention of the present application occurs. Two integrated dimension measurement devices 100 are fixed in front of forklift FL, and dimension measurement device 100 is configured to be movable up and down and to image fork F holding a cargo with a loading platform and the periphery thereof.

In the state illustrated in FIG. 2A, a cargo is not loaded on fork F, and dimension measurement device 100 acquires a background distance image that does not include a cargo which is an object to be measured. In the state illustrated in FIG. 2B, cargo CP with a loading platform having cargo C placed on loading platform P is loaded on fork F, and dimension measurement device 100 acquires a cargo distance image including cargo C (hereinafter, cargo CP with a loading platform may also be included) which is a target for the measurement of dimension.

It is considered that dimensions of cargo C is acquired by comparing the background distance image obtained in the state illustrated in FIG. 2A and the cargo distance image obtained in the state illustrated in FIG. 2B with each other and taking a difference between the images to thereby extract only a distance image of cargo C. However, there is actually a possibility that there is a difference in the height of fork F between the state illustrated in FIG. 2A and the state illustrated in FIG. 2B. That is, it is considered that the height of fork F in the state where cargo CP with a loading platform is loaded (FIG. 2B) may be smaller than the height of fork F in the state where cargo CP with a loading platform is not loaded (FIG. 2A). That is, the position of fork F changes at a point in time of the acquisition of the background distance image and a point in time of the acquisition of the cargo distance image, and thus it is expected that there is a difficulty in extracting a distance image of cargo C.

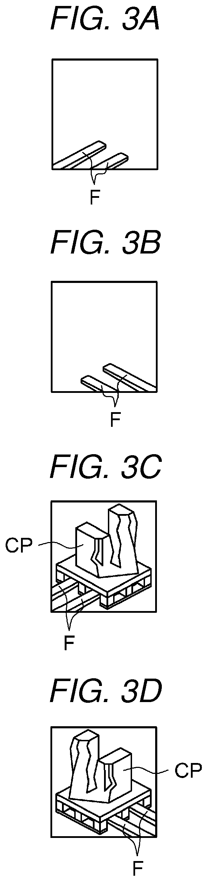

FIGS. 3A to 3D are diagrams of distance images that specifically show the above-described phenomena. FIG. 3A illustrates a background distance image captured by dimension measurement device 100A in FIG. 2A, and FIG. 3B illustrates a background distance image captured by dimension measurement device 100B in FIG. 2A. FIG. 3C illustrates a cargo distance image captured by dimension measurement device 100A in FIG. 2B, and FIG. 3D illustrates a cargo distance image captured by dimension measurement device 100B in FIG. 2B. It can be understood that the position of fork F in an image changes, from comparison between FIG. 3A and FIG. 3C and comparison between FIG. 3B and FIG. 3D.

Fork F is an unnecessary object other than cargo C which is a target for the measurement of dimension, the specification of a region where fork F is present is a matter important for the extraction of cargo C and the measurement of dimension. However, when the background distance image and the cargo distance image differ in the position of fork F in the image as in the present example, it is difficult to specify a region including fork F, which may interfere with the measurement of dimension of cargo C.

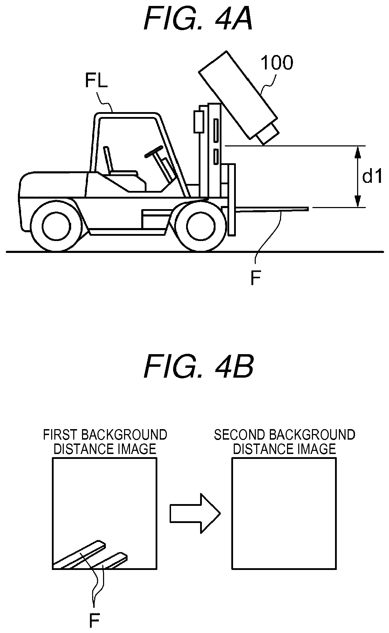

FIGS. 4A to 4D are conceptual diagrams illustrating processing performed by dimension measurement device 100 of the present exemplary embodiment in order to solve the above-described problems. FIG. 4A illustrates a state where no cargo is loaded on fork F, a distance between dimension measurement device 100 and fork F is d1, and dimension measurement device 100 acquires a background distance image that does not include a cargo. In this case, dimension measurement device 100 firstly acquires a first background distance image including fork F, as illustrated in FIG. 4B.

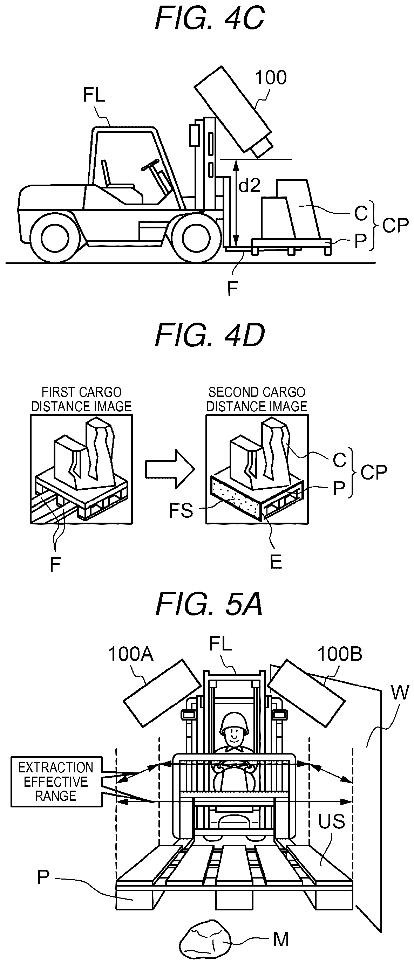

FIG. 4C illustrates a state where cargo CP with a loading platform is loaded on fork F, a distance between dimension measurement device 100 and fork F is d2, and dimension measurement device 100 acquires a cargo distance image including cargo C which is a target for the measurement of dimension. In this case, dimension measurement device 100 firstly acquires a first cargo distance image including fork F and cargo CP with a loading platform, as illustrated in FIG. 4D.

In FIG. 4C, the position of fork F is lower than the position in FIG. 4A because cargo CP with a loading platform is loaded on the fork, and the relation of d2>d1 is established. As a result, there is a difference in the position of fork F between the first background distance image illustrated in FIG. 4B and the first cargo distance image illustrated in FIG. 4D, and it is expected that there is a difficulty in extracting a distance image of cargo C.

Consequently, as illustrated in FIG. 4B, processor 130 excludes pixels including fork F which is an unnecessary object from the first background distance image and interpolates new pixels including distance information of pixels in the peripheral portion thereof with respect to the excluded pixels, in cooperation with memory 140. As a result, a second background distance image that does not include fork F is generated.

As illustrated in FIG. 4D, processor 130 performs edge detection (detection method based on sudden changes such as distance information of a pixel) in cooperation with memory 140 or extracts edge E of loading platform P by a method such as pattern matching through comparison between a loading platform and a pattern that are registered in advance, in cooperation with memory 140. Thereby, processor 130 specifies the shape of loading platform P and specifies the shape of front surface FS among the side surfaces of the loading platform. Here, processor 130 can also detect fork F which is an object protruding from front surface FS, and excludes pixels of a region (side surface FS of the loading platform is also included) in which such a protruding object is present from the first cargo distance image, the region being assumed to be a region including an unnecessary object. In the present exemplary embodiment, new pixels including distance information of the corresponding pixels of the second background distance image are interpolated with respect to excluded pixels, thereby generating a second cargo distance image.

Processor 130 acquires a difference between the second background distance image and the second cargo distance image to thereby generate a final cargo distance image showing the shape of cargo C or cargo CP with a loading platform. The final cargo distance image is a target for coordinate development by a three-dimensional matching space to be described later and the generation of a circumscribed rectangular parallelepiped.

FIGS. 5A to 5C are conceptual diagrams illustrating Modification Example 1 of processing performed by dimension measurement device 100 of the present exemplary embodiment. As illustrated in FIG. 5A, in the present example, wall W of a distribution warehouse that has not been present in an image at the beginning of imaging, foreign material M having fallen on a floor, or the like are seen in the image in accordance with the movement of forklift FL. Similarly to fork F mentioned above, these are also unnecessary objects, and thus need to be excluded in the measurement of dimension. Cargo C is not illustrated in FIG. 5A.

In general, horizontal and vertical dimensions of cargo C are specified so as to be the same as horizontal and vertical dimensions of loading platform P. That is, as a packing condition, cargo C is set not to protrude from loading platform P. In the present example, pixels corresponding to an object which is present in a range exceeding the area of loading platform P are deleted by using this concept, similar to fork F mentioned above.

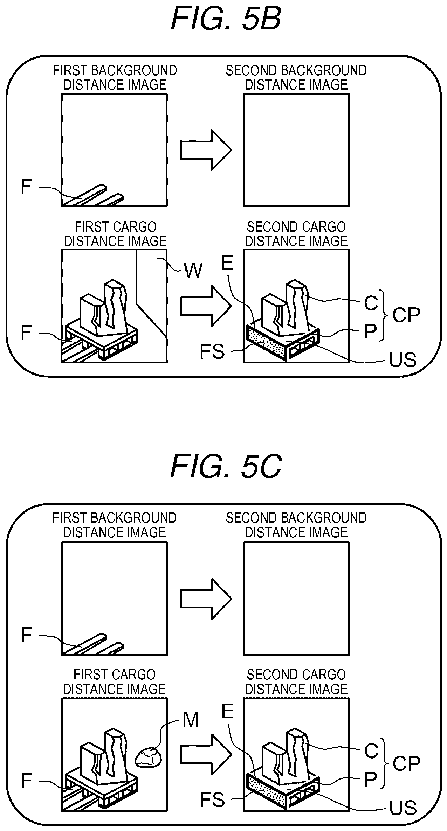

FIG. 5B illustrates the processing of an image related to wall W. Processing regarding a background distance image is the same as that in FIG. 4B, and dimension measurement device 100 acquires a first background distance image including fork F and then generates a second background distance image that does not include fork F.

Processor 130 excludes images of front surface FS of loading platform P and fork F in the first cargo distance image by the same processing as that illustrated in FIG. 4D, and interpolates new pixels including distance information of the corresponding pixels of the second background distance image. Processor 130 determines that wall W present in the first cargo distance image exceeds the area of loading platform P.

An area seen from above loading platform P, that is, the horizontal and vertical dimensions thereof are known in advance, and processor 130 can specify the area (extraction effective range) of a rectangular parallelepiped with upper surface US of loading platform P as the bottom surface as illustrated in FIG. 5A and can specify a region including an object which is present outside the area, as a region including an unnecessary object. For this reason, processor 130 can determine wall W to be an unnecessary object. Processor 130 excludes pixels of a region including wall W from the first cargo distance image, the region being set as a region including an unnecessary object. In the present exemplary embodiment, processor 130 interpolates new pixels including distance information of the corresponding pixels of the second background distance image, with respect to the excluded pixels.

FIG. 5C illustrates the processing of an image related to foreign material M on a floor. Similarly to wall W, processor 130 can determine foreign material M to be an unnecessary object. Processor 130 excludes pixels of a region including foreign material M from the first cargo distance image, the region being set as a region including an unnecessary object. In the present exemplary embodiment, processor 130 interpolates new pixels including distance information of the corresponding pixels of the second background distance image, with respect to the excluded pixels.

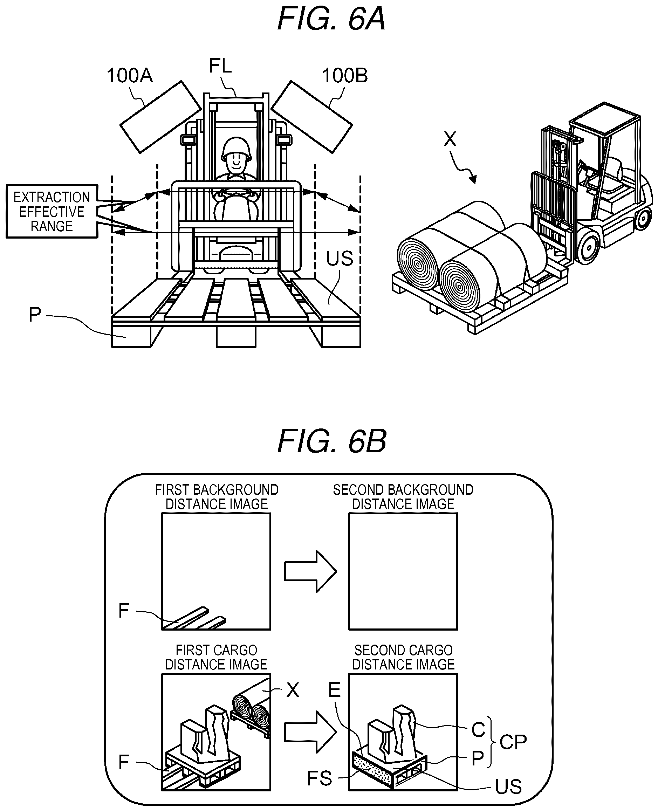

FIGS. 6A and 6B are conceptual diagrams illustrating a second modification example of processing performed by dimension measurement device 100 of the present exemplary embodiment. As illustrated in FIG. 6A, in the present example, another object X (another forklift having a cargo loaded thereon in the present example), which has not been present in an image at the beginning, approaches dimension measurement device 100 and is seen in the image. Similarly to fork F mentioned above and the like, another object X is also an unnecessary object and need to be excluded in the measurement of dimension. Cargo C is not illustrated in FIG. 6A.

FIG. 6B illustrates the processing of an image related to another object X. Processing regarding background distance image is the same as that in FIG. 4B, and dimension measurement device 100 acquires a first background distance image including fork F and then generates a second background distance image that does not include fork F.

Processor 130 excludes images of front surface FS of loading platform P and fork F in the first cargo distance image by the same processing as that illustrated in FIG. 4C, and interpolates new pixels including distance information of the corresponding pixels of the second background distance image. Processor 130 determines that another object X present in the first cargo distance image is present in a range exceeding the area of loading platform P.

An area seen from above loading platform P, that is, the horizontal and vertical dimensions thereof are known in advance, and processor 130 can specify the area (extraction effective range) of a rectangular parallelepiped with upper surface US of loading platform P as the bottom surface as illustrated in FIG. 6A and can specify a region including an object which is present outside the area, as a region including an unnecessary object. For this reason, processor 130 can determine another object X to be an unnecessary object. Processor 130 excludes pixels of a region including another object X from the first cargo distance image, the region being set as a region including an unnecessary object. In the present exemplary embodiment, processor 130 interpolates new pixels including distance information of the corresponding pixels of the second background distance image, with respect to the excluded pixels.

### [Operation]

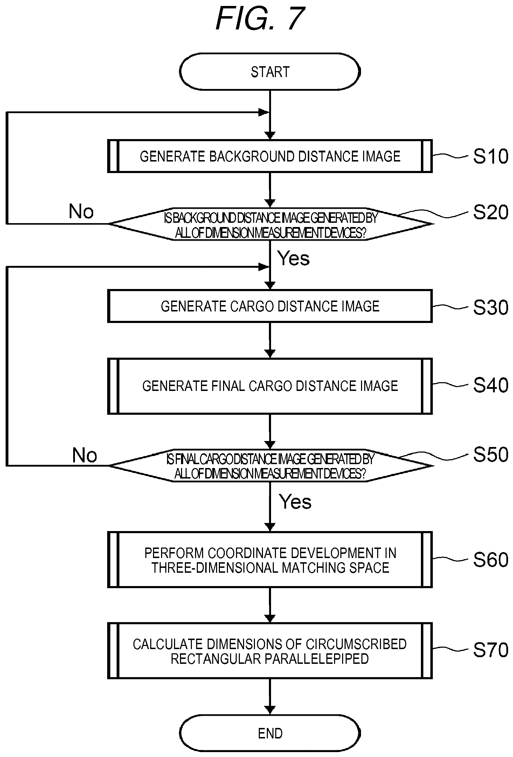

FIGS. 7 to 11 are flow charts illustrating a specific operation procedure performed by dimension measurement device 100 of the present exemplary embodiment. FIG. 7 is a flow chart illustrating an outline of an operation procedure performed by dimension measurement device 100 of Exemplary Embodiment 1.

As illustrated in FIG. 7, projector 120 of one dimension measurement device 100 (100A) projects measurement light, for example, in the state illustrated in FIG. 2A with an operator's input of an artificial operation start command or an input of a signal from a specific sensor or the like as a trigger, and generates a background distance image (first background distance image) on the basis of the measurement light reflected by camera 110 (step S10). In general, n dimension measurement devices 100 (n≥2) are provided, and thus the operation of step S10 is repeated until all of dimension measurement devices 100 (n dimension measurement devices) generate a background distance image (step S20).

After all of dimension measurement devices 100 generate the background distance image (step S20; Yes), projector 120 of one dimension measurement device 100 (100A) projects measurement light, for example, in the state illustrated in FIG. 2B, and generates a cargo distance image (a first cargo distance image and a second cargo distance image) on the basis of the measurement light reflected by camera 110 (step S30). Processor 130 generates a final cargo distance image that includes an image of only cargo C (or cargo CP with a loading platform) as a target for the measurement of dimension and shows the shape of cargo C (or cargo CP with a loading platform) on the basis of the obtained background distance image and cargo distance image (step S40). The operations of steps S30 and S40 are repeated until all of dimension measurement devices 100 (n dimension measurement devices) generate the final cargo distance image (step S50).

Step S10 can be performed in parallel with steps S30 and S40. That is, while specific dimension measurement device 100 (for example, 100A) generates the final cargo distance image by steps S30 and S40, another dimension measurement device 100 (for example, 100B) may generate a background distance image by step S10, and the order of processing is not particularly limited.

Thereafter, processor 130 of specific dimension measurement device 100 synthesizes the obtained final cargo images and performs coordinate development thereof in a three-dimensional matching space (step S60). Processor 130 generates a circumscribed rectangular parallelepiped of the final cargo distance image and calculates dimensions of three sides of the circumscribed rectangular parallelepiped (step S70). Here, the wording "circumscribed rectangular parallelepiped" refers to a smallest rectangular parallelepiped that has a side parallel to an inertia main shaft direction and holds cargo C (or cargo CP with a loading platform), that is, a rectangular parallelepiped having six surfaces each of which is in contact with the surface of cargo C (or cargo CP with a loading platform) at at least one point. Steps S60 and S70 will be described later in detail.

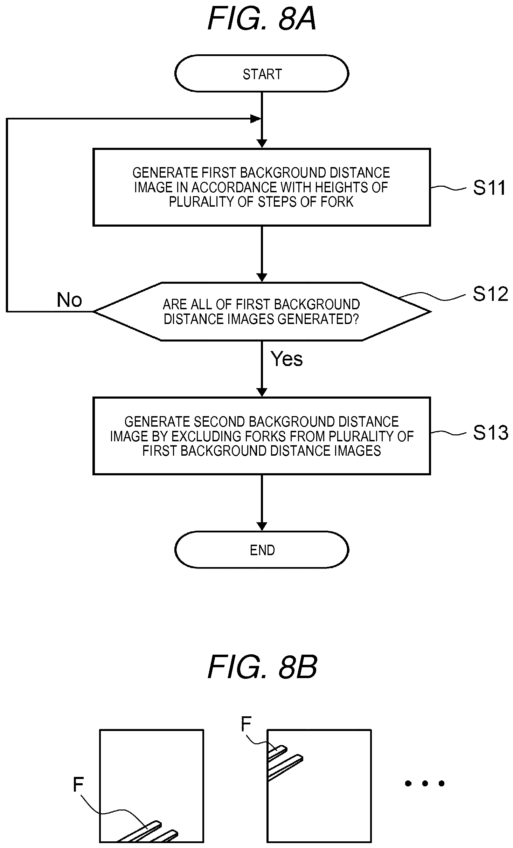

FIG. 8A is a flow chart illustrating a detailed processing procedure (subroutine) of step S10 in FIG. 7. Projector 120 and camera 110 of dimension measurement device 100 generate a (first) background distance image with the above-described predetermined as a trigger. In the present exemplary embodiment, as illustrated in FIG. 8B, an operator changes the height of fork F of forklift FL in a plurality of steps, dimension measurement device 100 generates a first background distance image according to each step whenever the change is made (step S11), and processor 130 stores the first background distance image in memory 140. It is expected that the height of fork F at the time of loading varies due to cargo CP with a loading platform, and thus the first background distance images having different positions of fork F are generated and stored.

When the first background distance images are generated in accordance with all of the heights at the plurality of steps (step S12; Yes), processor 130 synthesizes all of the first background distance images stored in memory 140 and generates a second background distance image from which fork F is excluded (step S13).

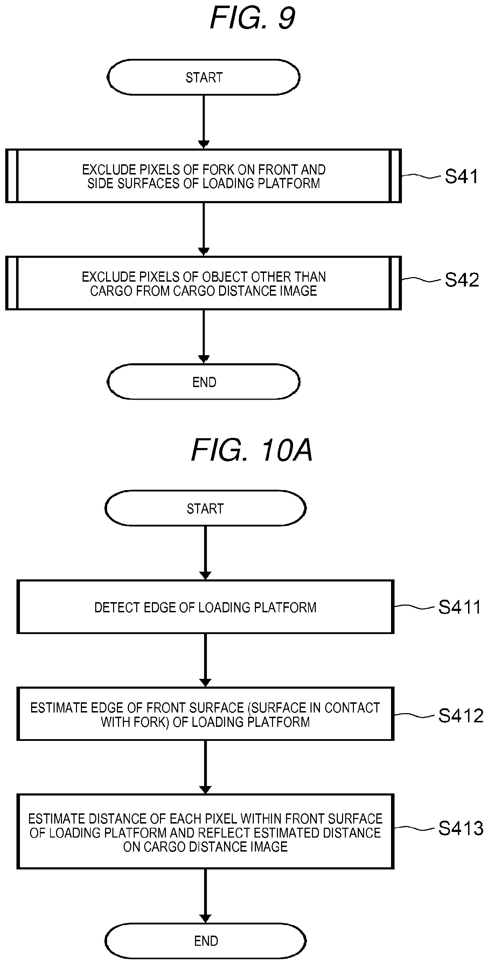

FIG. 9 is a flow chart illustrating a detailed processing procedure (subroutine) of step S40 in FIG. 7. Processor 130 estimates a distance to a front surface (surface in contact with the fork) among side surfaces of the loading platform from the cargo distance image (first cargo distance image or second cargo distance image) which is generated in step S30, and excludes pixels of the fork portion on the front surface (step S41). Subsequently, processor 130 estimates the upper surface (surface on which cargo C is mounted) of loading platform P, and performs interpolation from a background distance image in which a pixel, having a difference between the cargo distance image (first cargo distance image) having a portion above the upper surface being excluded and the corrected background distance image (second background distance image), is corrected to the cargo distance image, to thereby generate the second cargo distance image from which pixels of an object other than the cargo are excluded (step S42).

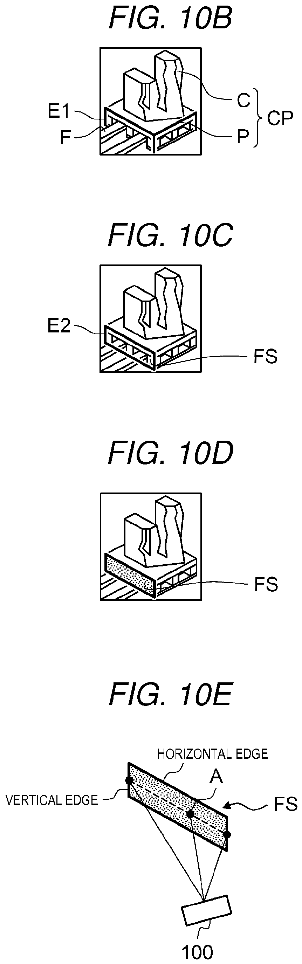

FIG. 10A is a flow chart illustrating a detailed processing procedure (subroutine) of step S41 in FIG. 9. Processor 130 detects edge E1 of the contour of loading platform P by a method such as edge detection or pattern matching, as illustrated in FIG. 10B (step S411). Next, processor 130 estimates edge E2 of front surface FS (surface in contact with fork F) of loading platform P which cannot be directly detected (due to fork F being mounted), as illustrated in FIG. 10C, on the basis of the detected edge E1 of the contour (step S412). As illustrated in FIG. 10D, processor 130 estimates a distance of each pixel within front surface FS from dimension measurement device 100 and associates the distance information with a cargo distance image (step S413). Here, the estimation of the distance can be performed by various methods. For example, in a case where a distance to any pixel A within front surface FS is estimated as illustrated in FIG. 10E, processor 130 calculates the distance from distances to intersection points between a line, which passes through pixel A and is parallel to a horizontal edge of front surface FS, and a vertical edge thereof by triangulation. As described above, in step S41, a region (FS) including an unnecessary object (fork) other than the cargo or the cargo with a loading platform in the first cargo distance image is specified on the basis of the shape (edge) of the loading platform which is present in the first cargo distance image, and distance information is written in the specified region as predetermined information, thereby excluding the presence of the fork from the cargo distance image. The information written as the predetermined information may be Null data (which is an identifiable code and is data negligible in the future computational calculation).

In the above-described method, only a portion present in FS in the fork is excluded from the cargo distance image, but a method of excluding the fork from the cargo distance image is not limited thereto. For example, a region including an unnecessary object other than the cargo or the cargo with a loading platform can also be defined as a region including a linear object (the entire fork) protruding from FS instead of being defined as FS. The presence or absence of such a region can be defined by processor 130 from distance information expressed by the first cargo distance image. Specifically, FS may be similarly specified, and processor 130 may computationally calculate the presence or absence of an object having a linear surface gradient protrudes from specified FS in a predetermined direction. In this manner, in a case where a region including an unnecessary object other than the cargo or the cargo with a loading platform is specified as the entire fork, Null data may be written in the specified region as predetermined information. Supplementation may be performed on the specified region using corresponding pixels (pixels on substantially the same coordinates) of the second background distance image as predetermined information, and a difference may be acquired later from the second background distance image.

In the present example, a description has been given of a method of excluding fork F, as an unnecessary object, which protrudes from front surface FS of loading platform P. However, a surface from which the unnecessary object protrudes is not limited to front surface FS, and may be any surface of the side surfaces including front surface FS.

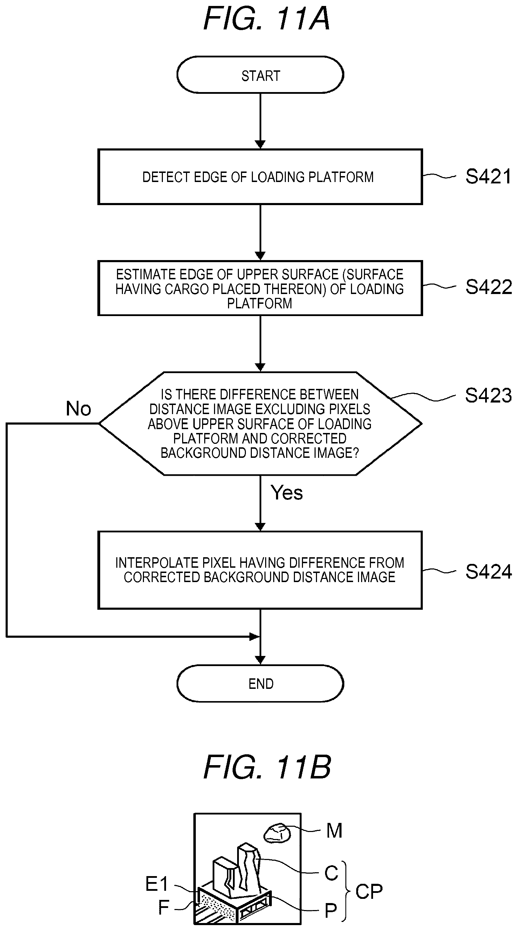

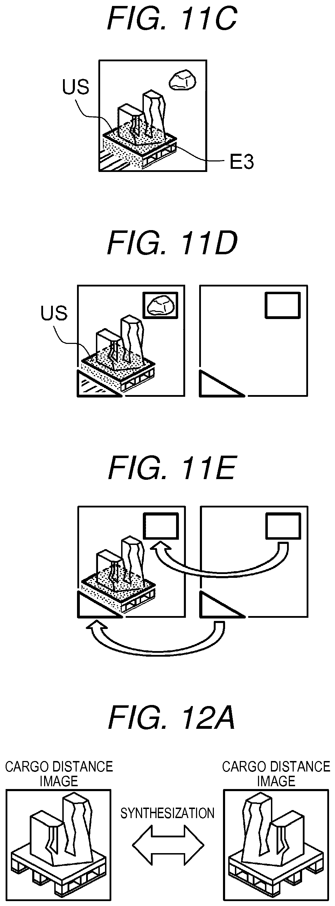

FIG. 11A is a flow chart illustrating a detailed processing procedure (subroutine) of step S42 in FIG. 9. As illustrated in FIG. 11B, processor 130 detects edge E1 of the contour of loading platform P by a method such as edge detection or pattern matching (step S421). Next, processor 130 estimates edge E3 of upper surface (surface having cargo C placed thereon) US of loading platform P, as illustrated in FIG. 11C (step S422). As illustrated in FIG. 11D, processor 130 determines whether or not there is a difference between the first cargo distance image excluding pixels above upper surface US and the corrected background distance image (second background distance image) (step S423). For example, processor 130 checks a difference for each pixel, determines whether or not a pixel having a difference is present at a position above upper surface US of loading platform P, regards the image as an object to be interpolated in a case where the image is not positioned above the upper surface of loading platform P, and excludes the pixel (step S423; Yes). As illustrated in FIG. 11E, processor 130 interpolates the pixel excluded in step S423 by using corresponding pixels of the corrected background distance image (second background distance image) with respect to a pixel having a difference, to thereby generate a second cargo distance image (step S424). As described above, in step S42, a region (region other than a region above the loading platform) including an unnecessary object other than the cargo or the cargo with a loading platform in the first cargo distance image is specified on the basis of the shape (edge) of the loading platform which is present in the first cargo distance image, distance information (corresponding pixels of the second background distance image) is written in the specified region as predetermined information, thereby excluding the presence of the unnecessary object from the cargo distance image.

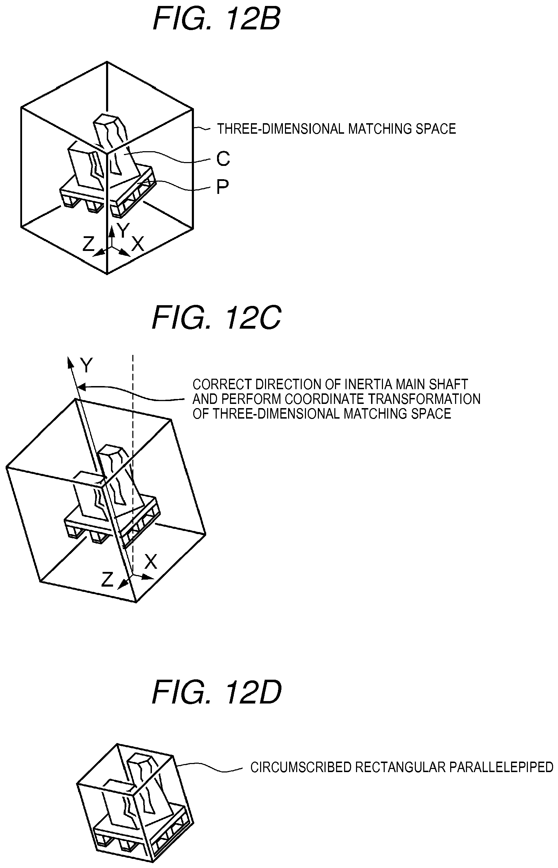

FIG. 12 is a diagram illustrating an outline of the processes of steps S60 and S70 in FIG. 7. Processor 130 performs coordinate development of the final cargo distance image generated on the basis of the second cargo distance image in a three-dimensional matching space, generates a circumscribed rectangular parallelepiped of the final cargo distance image having been subjected to the coordinate development, and calculates dimensions of three sides of the circumscribed rectangular parallelepiped.

Processor 130 generates the final cargo distance image. The wording "final cargo distance image" refers to an image constituted by pixels representing the shape of cargo C (or cargo CP with a loading platform) which does not basically include a background other than cargo C (or cargo CP with a loading platform). A method of acquiring and generating a difference between the second background distance image and the second cargo distance image is provided as a method of generating the final cargo distance image. This method is a method performed in a case where the second cargo distance image is generated using corresponding pixels of the second background distance image in step S413 to step S424. On the other hand, in a case where the exclusion of a pixel is performed using Null data in steps S413 and S424, the second cargo distance image is set as the final cargo distance image. As illustrated in FIG. 12A, processor 130 synthesizes final cargo distance images of all of dimension measurement devices 100 which are obtained in step S50 in FIG. 7, to thereby obtain a final distance image which is in a state where the coordinate development of the final distance image can be performed in a three-dimensional matching space. As illustrated in FIG. 12B, processor 130 performs coordinate development of the obtained final cargo distance image in a three-dimensional matching space. Here, it is assumed that a bottom surface in the final cargo distance image is not necessarily disposed in parallel with the Z-X plane of the bottom surface of the three-dimensional matching space.

As illustrated in FIG. 12C, processor 130 corrects the direction of an inertia main shaft and performs coordinate transformation of the three-dimensional matching space. The wording "inertia main shaft" as used herein refers to a shaft for minimizing a projection area onto the Z-X plane (horizontal plane) when the cargo is rotated about the shaft. Finally, as illustrated in FIG. 12D, processor 130 calculates a circumscribed rectangular parallelepiped of the cargo within the three-dimensional matching space having subjected to the coordinate transformation. The circumscribed rectangular parallelepiped is defined as a minimum dimension when a cargo is packed.

In the actual cargo distribution situation, the position of an unnecessary object may change (example illustrated in FIG. 4), or an unnecessary object, which has not been present at a point in time of the acquisition of a background distance image, may be seen in an image at a point in time of the acquisition of a cargo distance image (examples illustrated in FIGS. 5 and 6). In this manner, even when an environment at a point in time when the background distance image is acquire is different from an environment at a point in time when the cargo distance image is acquired, a process of excluding an unnecessary object is performed in the present exemplary embodiment, and thus it is possible to obtain an appropriate image of a cargo or a cargo with a loading platform and to accurately measure dimensions of the cargo or the cargo with a loading platform.

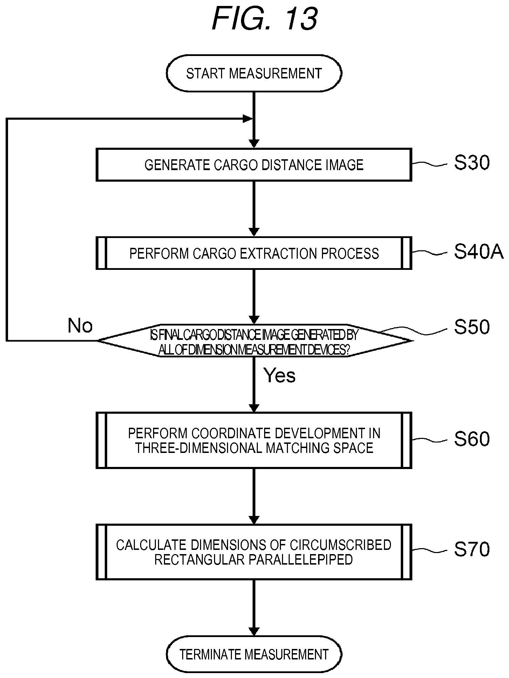

In Exemplary Embodiment 1 described above, dimension measurement device 100 acquires a background distance image, and may use the acquired background distance image later for the interpolation of pixels excluded in a cargo distance image. However, the above-described interpolation of the excluded pixels is not limited to being performed with respect to pixels of the background distance image. For example, interpolation may be performed by writing pixels having another identifiable code such as Null data. In this case, the background distance image is not necessarily required to be acquired, and processor 130 writes predetermined information with respect to pixels of a region including an unnecessary object and a specified region to thereby generate a second cargo distance image. FIG. 13 illustrates a processing procedure in a case where a background distance image is not acquired. Dimension measurement device 100 starts the process of step S30 without performing the processes of steps S10 and S20 in FIG. 7. Dimension measurement device 100 performs the process of step S40A instead of step 40 in FIG. 7, then performs the processes of steps S50, S60, and S70 in FIG. 7, and terminates the processes.

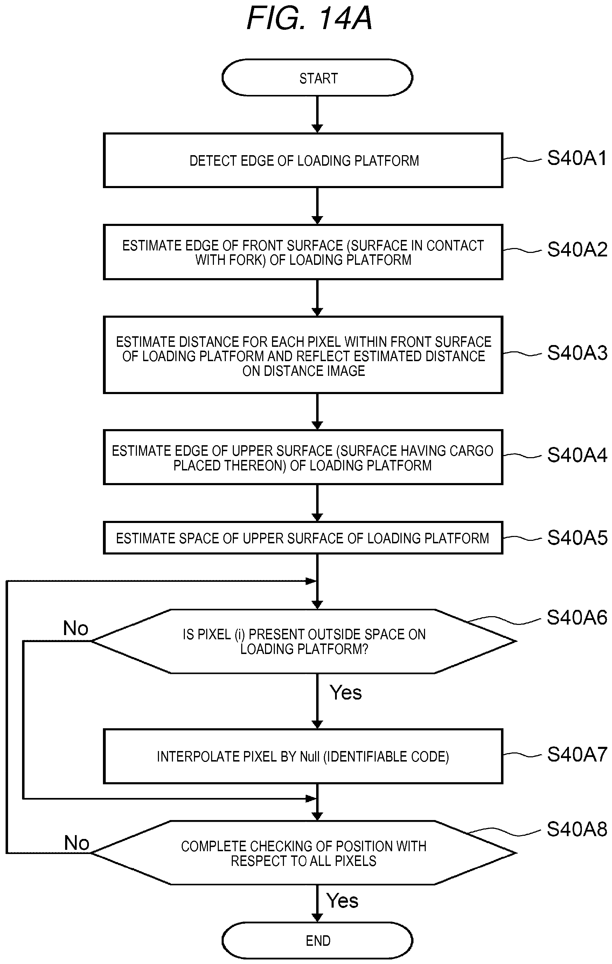

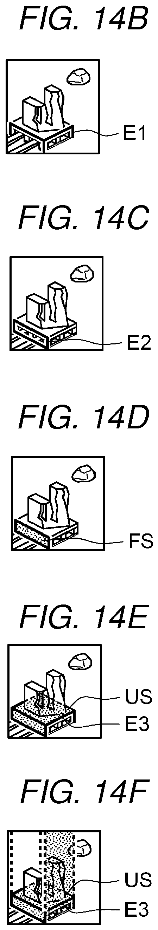

FIG. 14A is a flow chart illustrating a detailed processing procedure (subroutine) of step S40A in FIG. 13. As illustrated in FIG. 14B, processor 130 detects edge E1 of the contour of loading platform P by a method such as edge detection or pattern matching (step S40A1). Next, processor 130 estimates edge E2 of front surface FS (surface in contact with fork F) of loading platform P which cannot be directly detected (due to fork F being mounted), as illustrated in FIG. 14C, on the basis of the detected edge E1 of the contour (step S40A2). As illustrated in FIG. 14D, processor 130 estimates a distance of each pixel within front surface FS from dimension measurement device 100 and associates the distance with a cargo distance image (step S40A3). Here, the estimation of the distance can be performed, for example, by the method illustrated in FIG. 10E.

Next, processor 130 estimates edge E3 of upper surface (surface having cargo C placed thereon) US of loading platform P, as illustrated in FIG. 14E (step S40A4). Processor 130 estimates a space above upper surface US of loading platform P, as illustrated in FIG. 14F, on the basis of edge E3 (step S40A5). Further, in a case where specific pixel (i) in an image is present in a region outside the space (step S40A6; Yes), processor 130 excludes the pixel and writes, for example, Null data (identifiable code) to thereby interpolate the pixel (step S40A7). Finally, processor 130 confirms whether or not any pixel to be supplemented is included in all of the pixels, and generates a second background distance image after terminating the confirmation (step S40A8).

### (Second Exemplary Embodiment)

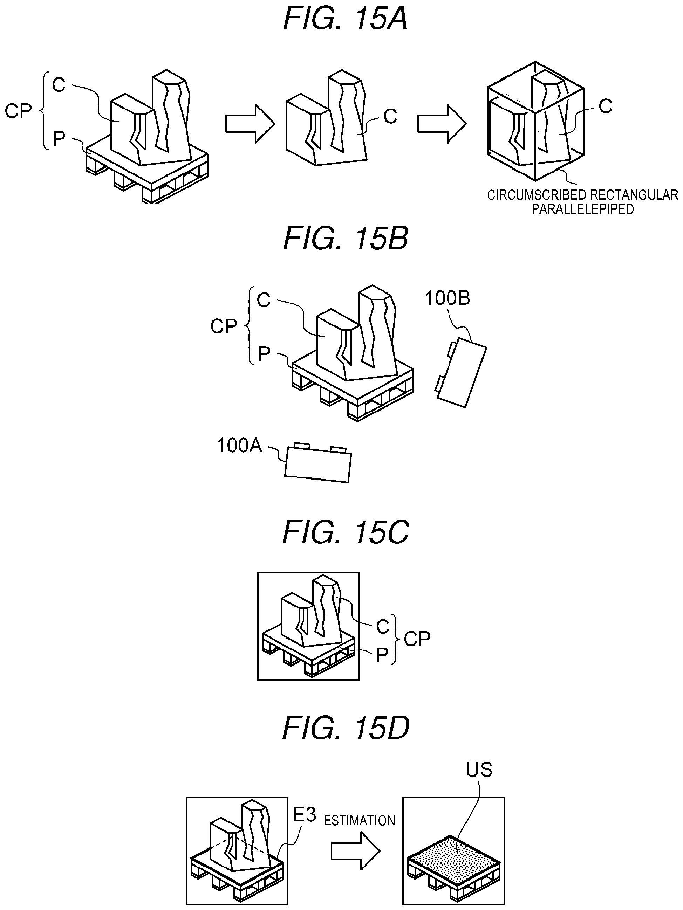

FIGS. 15A to 15E are conceptual diagrams illustrating processing performed by dimension measurement device 100 according to Exemplary Embodiment 2. FIG. 15A is an image illustrating the overall processing, and dimension measurement device 100 fixed to a floor can capture an image of cargo CP with a loading platform fixed to a specific location, can exclude loading platform P, and can calculate a circumscribed rectangular parallelepiped of cargo C. A configuration of the device in the present exemplary embodiment is in common with the configuration of the dimension measurement device according to Exemplary Embodiment 1 illustrated in FIG. 1, and is also in common with those in the following other exemplary embodiments.

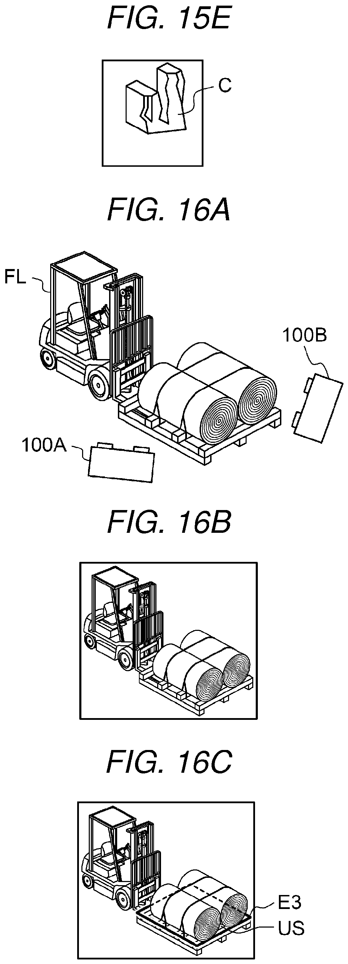

First, dimension measurement device 100 (100A, 100B) acquires a background distance image of the specific location (substantially captures an image of only the floor) in a state where cargo CP with a loading platform is not present, to thereby generate a background distance image. Next, dimension measurement devices 100A and 100B capture an image of cargo CP with a loading platform as illustrated in FIG. 15B, to thereby acquire a first cargo distance image including cargo CP with a loading platform as illustrated in FIG. 15C. Next, as illustrated in FIG. 15D, processor 130 of dimension measurement device 100 detects edge E3 of upper surface US of loading platform P from the first cargo distance image and then estimates upper surface US. Processor 130 specifies a rectangular area (extraction effective range) with upper surface US as the bottom surface thereof, and specifies a region including an object, which is present outside the area, as a region in which an unnecessary object is present. Processor 130 excludes pixels of a region including the object which is present outside the area (for example, writes Null data), to thereby generate a final cargo distance image (may be a second cargo distance image in the present exemplary embodiment) as illustrated in FIG. 15E. In this manner, it is possible to exclude loading platform P and calculate a circumscribed rectangular parallelepiped of cargo C. As described above, it is possible to exclude the presence of an unnecessary object from a cargo distance image by specifying a region (region outside the rectangular area with upper surface US as the bottom surface thereof) in which the unnecessary object other than a cargo or a cargo with a loading platform is present in the first cargo distance image, on the basis of the shape (edge) of the loading platform which is present in the first cargo distance image, and writing distance information (Null data) in the specified region as predetermined information.

In the present exemplary embodiment, there is no change occurring, other than the presence or absence of cargo CP with a loading platform, between an environment at a point in time when a background distance image is acquired and an environment at a point in time when a cargo distance image is acquired, unlike the examples illustrated in FIGS. 4 to 6. However, rather than requiring dimensions of cargo CP with a loading platform, dimensions of cargo C itself, except for loading platform P, may also be required in accordance with a distributor's request or the like. In the present exemplary embodiment, cargo C, except for only loading platform P as a portion of cargo CP with a loading platform which is a difference between the background distance image and the cargo distance image, can be extracted, and thus it is possible to respond to such a request.

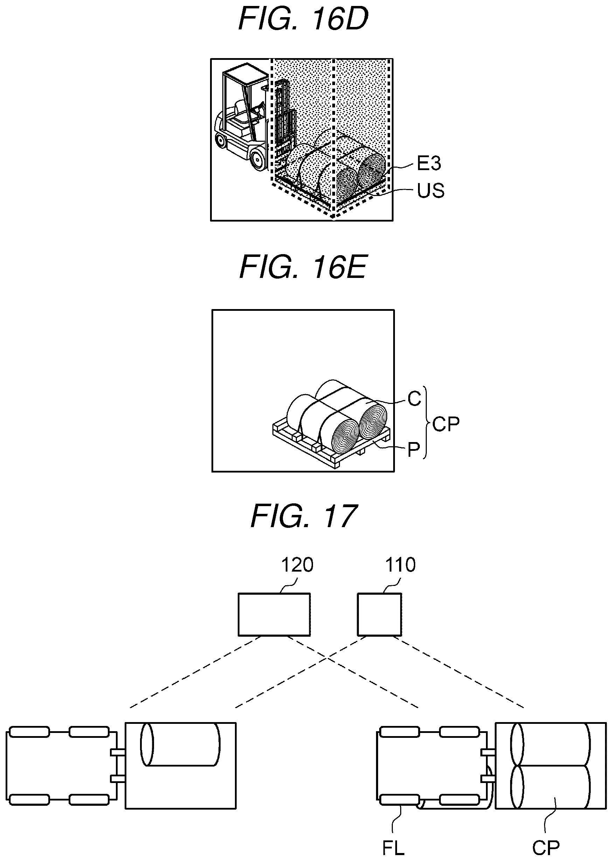

It is also possible to computationally calculate a circumscribed rectangular parallelepiped of cargo C by using a similar method. FIGS. 16A to 16E are conceptual diagrams illustrating a modification example of processing performed by dimension measurement device 100 according to Exemplary Embodiment 2. First, dimension measurement device 100 (100A, 100B) acquires a background distance image including forklift FL (substantially captures an image of only the forklift) in a state where cargo CP with a loading platform is not present, then captures an image of cargo CP with a loading platform which is loaded on forklift FL together with forklift FL as illustrated in FIG. 16A, and acquires a first cargo distance image including cargo CP with a loading platform (FIG. 16B). Next, as illustrated in FIG. 16C, processor 130 of dimension measurement device 100 detects edge E3 of upper surface US of loading platform P from the first cargo distance image. Processor 130 estimates upper surface US as illustrated in FIG. 16D. Processor 130 specifies a rectangular area (extraction effective range) with upper surface US as the cross-section thereof, and specifies a region including an object, which is present outside the area, as a region in which an unnecessary object is present. Processor 130 excludes pixels of the region including an object, which is present outside the area (for example, writes Null), to thereby generate final cargo distance image (may also be a second cargo distance image in the present exemplary embodiment) as illustrated in FIG. 16E. As described above, it is possible to exclude the presence of an unnecessary object from a cargo distance image by specifying a region (region outside the rectangular area with upper surface US as the cross-section thereof) in which the unnecessary object other than a cargo or a cargo with a loading platform is present in the first cargo distance image, on the basis of the shape (edge) of the loading platform which is present in the first cargo distance image, and writing distance information (Null data) in the specified region as predetermined information.

As described in Exemplary Embodiment 2, a region including an unnecessary object is specified on the basis of a loading platform. According to approach for the exclusion from a cargo distance image, it is possible to generate a final cargo distance image even in a state where cargo C is loaded on a forklift or the like and passes through a predetermined path.

FIG. 17 is a conceptual diagram illustrating processing performed by dimension measurement device 100 according to the present exemplary embodiment. As illustrated in FIG. 17, forklift FL having cargo CP with a loading platform loaded thereon moves through a predetermined path of a warehouse, and dimension measurement device 100 is disposed at the side of the path. Projector 120 projects measurement light, and camera 110 having received the reflected measurement light acquires a plurality of first background distance images during the movement of cargo CP with a loading platform. Processor 130 performs the above-described processing (see FIGS. 13 and 14) to thereby generate a final cargo distance image.

### (Third Exemplary Embodiment)

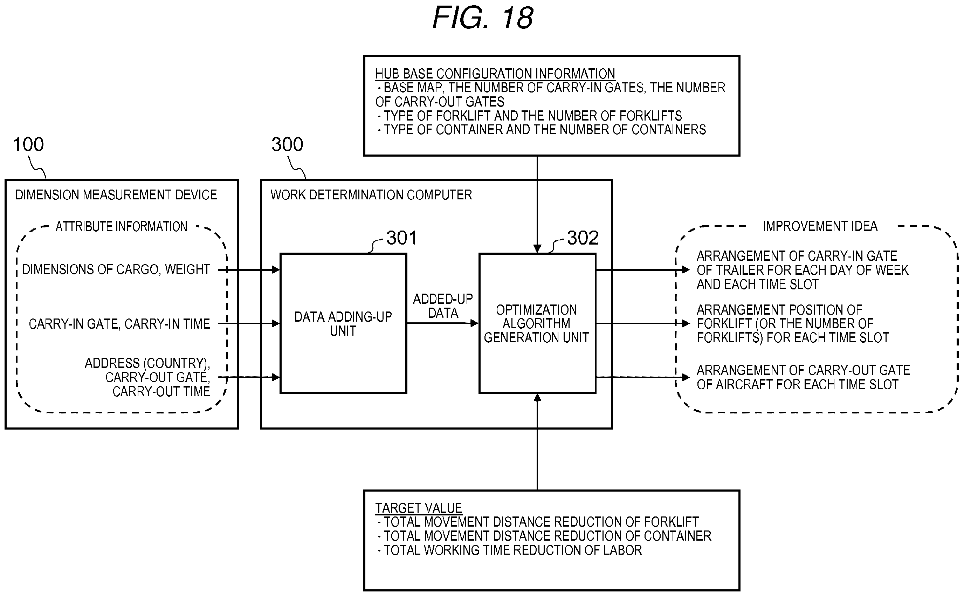

FIG. 18 is a conceptual diagram illustrating processing performed by a work diagnosis system including dimension measurement device 100 according to the present exemplary embodiment. The work diagnosis system is a system that adds up pieces of attribute information for each cargo C and is utilized for work diagnosis within a hub base. For example, dimension measurement device 100 transmits the pieces of attribute information including various pieces of information acquired from dimensions calculated by dimension measurement device 100 itself, a tag attached to the cargo, and the like to work determination computer 300, during the imaging of the cargo. The pieces of attribute information include dimensions of the cargo, weight, a carry-in gate, a carry-in time, an address (country), a carry-out gate, a carry-out time, and the like.

Data adding-up unit 301 of work determination computer 300 receives the pieces of attribute information, adds up the pieces of attribute information in a predetermined format, and transmits the added-up information to optimization algorithm generation unit 302. Optimization algorithm generation unit 302 generates an improvement idea with respect to the received pieces of attribute information in consideration of hub base configuration information in the hub base and a work reduction target value. The hub base configuration information includes, for example, a base map, the number of carry-in gates, the number of carry-out gates, a type of fork list, the number of fork lists, a type of container, the number of containers, and the like. The work reduction target value includes, for example, a total movement distance reduction target value of a forklift, a total movement distance reduction target value of a container, a total working time reduction target value of labor, and the like. The improvement idea includes the arrangement of a carry-in gate of a trailer for each day of the week and each time slot, the arrangement position of a forklift (or the number of forklifts) for each time slot, the arrangement of a carry-out gate of an aircraft for each time slot, and the like.

That is, the work diagnosis system analyzes contents such as in which time slot what type of cargo is large in number, and improves the arrangement of a trailer, a forklift, and a container, and the like. Thereby, it is possible to achieve reductions in a total operation time of a forklift, a cargo evacuation read time, a trailer standby time, and the like. These analysis results can be seen in various data formats, and thus it is possible to achieve an improvement in work.

### (Other Modification Examples)

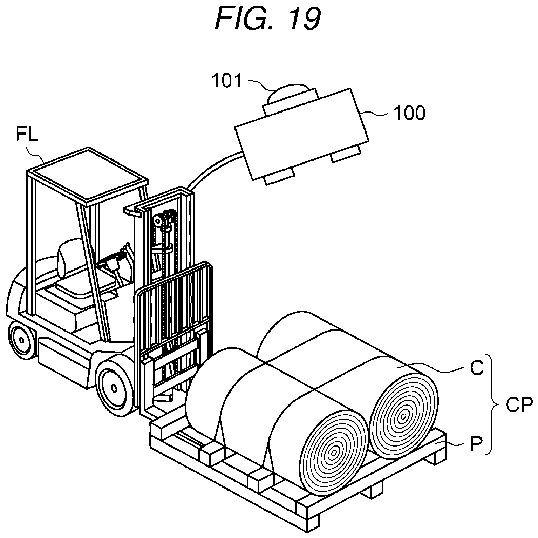

FIG. 19 is a conceptual diagram illustrating a modification example of the exemplary embodiment of the present disclosure. In the above-described example of the exemplary embodiment, the number of dimension measurement devices 100 installed at forklift FL is two, but may be one. Naturally, the installation position of dimension measurement device 100 can be freely determined. For example, a rail for dimension measurement device 100 may be attached to forklift FL, and the position of the device may be changed in accordance with a handle operation of forklift FL.

In a case where the number of dimension measurement devices 100 installed at forklift FL is set to be one, it is preferable that a background distance image and a cargo distance image are captured at least twice from different angles. For example, the first imaging can be performed from the front side, and the second imaging can be performed obliquely from above.

As illustrated in FIG. 19, brightness sensor 101 may be attached to dimension measurement device 100. This is because it is assumed that an operation environment (illumination conditions or the like) is different for each imaging location. For example, it is possible to start up dimension measurement device 100 when forklift FL enters an area with a fixed brightness, and to exclude influence of outside light conditions depending on a location.

In the above-described exemplary embodiment, projector 120 and camera 110 that reflect measurement light and receive the reflected measurement light are used. However, a medium for obtaining a distance image is not limited to light, and may be infrared rays, a laser, or the like. Accordingly, it is possible to use a general transmitter that transmits measurement waves, instead of projector 120. It is possible to use a receiver that receives reflected measurement waves, instead of camera 110.

In the above-described exemplary embodiment, a relative positional relationship between camera 110 and cargo C or cargo CP with a loading platform is fixed when camera 110 obtains a cargo distance image from cargo C or cargo CP with a loading platform, but the present disclosure is not limited thereto. That is, camera 110 may obtain a cargo distance image by capturing an image of cargo C or cargo CP with a loading platform while rotating around cargo C or cargo CP with a loading platform. Camera 110 may capture an image of a state where cargo C or cargo CP with a loading platform is rotated with respect to camera 110 to thereby obtain a cargo distance image. In this manner, it is possible not only to obtain a cargo distance image by one camera 110 but also to continuously capture an image of cargo C or cargo CP with a loading platform from different angles, and thus more cargo distance images can be obtained. As a result, the accuracy of distance information included in the cargo distance image is further improved.

As described above, dimension measurement device 100 of the present exemplary embodiment, which is dimension measurement device 100 that measures dimensions of cargo C placed on loading platform P or cargo CP with a loading platform, includes a transmitter (projector 120) which transmits measurement waves, a receiver (camera 110) which receives the reflected measurement waves and acquires a first cargo distance image including cargo C and loading platform P, processor 130, and memory 140. Processor 130, cooperating with memory 140, stores the first cargo distance image in memory 140, specifies a region including an unnecessary object other than cargo C or cargo CP with a loading platform in the first cargo distance image, on the basis of the shape of loading platform P which is present in the first cargo distance image, and writes predetermined information in the specified region to thereby generate a second cargo distance image.

Thereby, dimension measurement device 100 generates the second cargo distance image in which predetermined information is written in the region including the unnecessary object other than cargo C or cargo CP with a loading platform. Accordingly, dimension measurement device 100 can appropriately generate a circumscribed rectangular parallelepiped of cargo C or cargo CP with a loading platform and to appropriately measure dimensions of cargo C or cargo CP with a loading platform.

The receiver (camera 110) may further acquire a background distance image that does not include the cargo, and processor 130 may acquire a difference between the background distance image and the second cargo distance image to thereby generate a final cargo distance image showing the shape of the cargo or the cargo with a loading platform. Thereby, dimension measurement device 100 can acquire an appropriate difference between the background distance image and the cargo distance image.

Processor 130 may extract edge E1 of loading platform P from the first cargo distance image to thereby specify the shape of loading platform P. Thereby, dimension measurement device 100 can appropriately exclude the unnecessary object on the basis of the shape of loading platform P.

Processor 130 may specify the shape of the side surface of loading platform P, and may specify a region including an object protruding from the side surface as a region in which the unnecessary object is present. Thereby, dimension measurement device 100 can also appropriately exclude the unnecessary object caught by the side surface.

Processor 130 may specify a rectangular area with upper surface US of loading platform P as either the bottom surface or the cross-section thereof, and may specify a region including an object which is present outside the area, as a region in which the unnecessary object is present.

The predetermined information may be pixel information of a region within the background distance image which corresponds to the region in which the unnecessary object is present. Thereby, dimension measurement device 100 can effectively utilize the background processing image and can appropriately generate the final cargo distance image.

The predetermined information may be Null data of the unnecessary object. Thereby, the second cargo distance image can be treated as the final cargo distance image, and thus it is possible to perform coordinate development of the second cargo distance image in a three-dimensional matching space, to generate a circumscribed rectangular parallelepiped of the second cargo distance image having been subjected to the coordinate development, and to calculate dimensions of the circumscribed rectangular parallelepiped. Thereby, dimension measurement device 100 can acquire the accurate dimension of cargo C or cargo CP with a loading platform.

Dimension measurement device 100 may be fixed to a predetermined position, cargo C or cargo CP with a loading platform may be moved at a predetermined speed, the receiver (camera 110) may acquire a plurality of background distance images and a plurality of first cargo distance images during the movement of cargo C or cargo CP with a loading platform, and processor 130 may generate a final cargo distance image from the plurality of background distance images and the plurality of first cargo distance images in consideration of the predetermined speed. Thereby, dimension measurement device 100 can effectively utilize the background processing image and can appropriately generate the final cargo distance image.

Processor 130 can perform coordinate development of the final cargo distance image in a three-dimensional matching space, can generate a circumscribed rectangular parallelepiped of the final cargo distance image having been subjected to the coordinate development, can calculate dimensions of the circumscribed rectangular parallelepiped. Thereby, dimension measurement device 100 can acquire the accurate dimension of cargo C or cargo CP with a loading platform.

The transmitter may be projector 120 that projects measurement light as measurement waves, and may be camera 110 that receives the measurement light reflected by the receiver. Thereby, dimension measurement device 100 can be reliably configured at a low cost.

In the present exemplary embodiment, a description has been given on the assumption that the cargo distance image and/or the background distance image is obtained through one imaging by using (a camera). However, the cargo distance image and/or the background distance image in the present disclosure is not limited to being obtained through one imaging by using (a camera). That is, it is also possible to apply images obtained by synthesizing two or more cargo distance images and/or background distance images, which are obtained by (a camera) performing imaging at different times, to the cargo distance image and/or the background distance image in the present exemplary embodiment. Specifically, it is also possible to generate a cargo distance image and/or a background distance image which is applied to the present exemplary embodiment by superimposing characteristic portions shown in common to two or more cargo distance images and/or background distance images obtained by (a camera) performing imaging at different times on each other and by generating a smaller number of cargo distance images and/or background distance images from two or more cargo distance images and/or background distance images.

A dimension measurement method of the present exemplary embodiment, which is a dimension measurement method of measuring dimensions of cargo C placed on loading platform P or cargo CP with a loading platform, includes transmitting measurement waves by a transmitter (projector 120), and receiving the reflected measurement waves by a receiver (camera 110), thereby acquiring a first cargo distance image including cargo C and loading platform P. Processor 130, cooperating with memory 140, stores the first cargo distance image in memory 140, specifies a region including an unnecessary object other than cargo C or cargo CP with a loading platform in the first cargo distance image, on the basis of the shape of loading platform P which is present in the first cargo distance image, and writes predetermined information in the specified region to thereby generate a second cargo distance image.

The dimension measurement method includes generating the second cargo distance image in which predetermined information is written in the region including the unnecessary object other than cargo C or cargo CP with a loading platform. According to this method, it is possible to appropriately generate a circumscribed rectangular parallelepiped of cargo C or cargo CP with a loading platform and to appropriately measure dimensions of cargo C or cargo CP with a loading platform.

As described above, the exemplary embodiment of the dimension measurement system according to the present disclosure has been described with reference to the accompanying drawings, but the present disclosure is not limited to such an example. It would be apparent for those skilled in the technical field that various modification examples, correction examples, replacement examples, addition examples, deletion examples, and equivalent examples are conceivable within the scope of the technical idea recited in the claims, and it would be understood that these fall within the technical scope of the present disclosure.

### INDUSTRIAL APPLICABILITY

The present disclosure is useful as a dimension measurement device capable of appropriately measuring dimensions of a cargo or a cargo with a loading platform, and a dimension measurement method.

### REFERENCE MARKS IN THE DRAWINGS

100: dimension measurement device
110: camera
120: projector
130: processor
140: memory
200: dimension measurement system
300: work determination computer
301: Data adding-up unit
302: optimization algorithm generation unit 302
C: cargo
CP: cargo with loading platform
F: fork
FL: forklift
M: foreign material
W: wall
P: loading platform (pallet)

## Claims

1. A dimension measurement device that measures dimensions of a cargo placed on a loading platform or a cargo with a loading platform, the dimension measurement device comprising:
a transmitter that transmits measurement waves;
a receiver that receives the reflected measurement waves and acquires a first cargo distance image including the cargo and the loading platform;
a processor; and
a memory,
wherein the processor, cooperating with the memory, stores the first cargo distance image in the memory, specifies a region including an unnecessary object other than the cargo or the cargo with a loading platform in the first cargo distance image, on the basis of a shape of the loading platform which is present in the first cargo distance image, and writes predetermined information in the specified region, thereby generating a second cargo distance image.

2. The dimension measurement device of claim 1,
wherein the receiver further acquires a background distance image that does not include the cargo, and
wherein the processor acquires a difference between the background distance image and the second cargo distance image to thereby generate a final cargo distance image showing a shape of the cargo or the cargo with a loading platform.

3. The dimension measurement device of claim 1,
wherein the processor extracts an edge of the loading platform from the first cargo distance image to thereby specify the shape of the loading platform.

4. The dimension measurement device of claim 3,
wherein the processor specifies a shape of a side surface of the loading platform, and specifies a region including an object protruding from the side surface as a region in which the unnecessary object is present.

5. The dimension measurement device of claim 3,
wherein the processor specifies a rectangular area with an upper surface of the loading platform as either a bottom surface or a cross-section of the area, and specifies a region including an object which is present outside the area as a region in which the unnecessary object is present.

6. The dimension measurement device of claim 2,
wherein the predetermined information is pixel information of a region in the background distance image which corresponds to a region in which the unnecessary object is present.

7. The dimension measurement device of claim 1,
wherein the predetermined information is Null data.

8. The dimension measurement device of claim 2,
wherein the processor performs coordinate development of the final cargo distance image in a three-dimensional matching space, generates a circumscribed rectangular parallelepiped of the final cargo distance image having been subjected to the coordinate development, and calculates dimensions of the circumscribed rectangular parallelepiped.

9. The dimension measurement device of claim 7,
wherein the processor performs coordinate development of the second cargo distance image in a three-dimensional matching space, generates a circumscribed rectangular parallelepiped of the second cargo distance image having been subjected to the coordinate development, and calculates dimensions of the circumscribed rectangular parallelepiped.

10. The dimension measurement device of claim 1,
wherein the transmitter is a projector that projects measurement light as the measurement waves, and
wherein the receiver is a camera that receives the reflected measurement light.

11. A dimension measurement method of measuring dimensions of a cargo placed on a loading platform or a cargo with a loading platform, the dimension measurement method comprising:
transmitting measurement waves by a transmitter;
receiving the reflected measurement waves and acquiring a first cargo distance image including the cargo and the loading platform by a receiver; and
causing a processor, cooperating with the memory, to store the first cargo distance image in the memory, to specify a region including an unnecessary object other than the cargo or the cargo with a loading platform in the first cargo distance image, on the basis of a shape of the loading platform which is present in the first cargo distance image, and to write predetermined information in the specified region, thereby generating a second cargo distance image.
